Europäisches Patentamt

European Patent Office

Office européen des brevets

(11) Publication number : **0 459 957 A1**

# (12) EUROPEAN PATENT APPLICATION

(21) Application number : 91830227.4

(22) Date of filing : 29.05.91

(51) Int. Cl.⁵ : **F16L 15/04, F16L 41/10**

(30) Priority : 31.05.90 IT 699690 U

(43) Date of publication of application :
04.12.91 Bulletin 91/49

(84) Designated Contracting States :
AT BE CH DE DK ES FR GB GR IT LI LU NL SE

(71) Applicant : CAMOZZI RACCORDI S.p.A.
9 Via Tito Speri
I-25065 Lumezzane S.S. (Brescia) (IT)

(72) Inventor : Camozzi, Bortolo, c/o CAMOZZI
RACCORDI S.p.A.
9, Via Tito Speri
I-25065 Lumezzane S.S. (Brescia) (IT)

(74) Representative : Manzoni, Alessandro
MANZONI & MANZONI - UFFICIO
INTERNAZIONALE BREVETTI P.le Arnaldo n.
2
I-25121 Brescia (IT)

(54) Connector with a seal inserted on the thread of the threaded shank.

(57)    The invention relates to a straight, angular, T-shaped o cross-shaped connector having at least one cylindrical or conic threaded shank (11) which screws into a body with a correspondingly threaded hole, and wherein an annular groove (15) is perifically formed on said threaded shank (11) and an annular seal designed to seal he screw connection between said threaded shank (11) and the body into which it is screwed is closely set in said groove.

Fig.3

The present invention relates to straight, angular, T-shaped, cross-shaped, etc. connectors to be used in the pneumatic field, having at least one threaded cylindrical or conic shank which screws on a body with a correspondingly threaded hole and having at least one part to which a tube or other element, through which a fluid can flow, is connected.

The sealing between the threaded shank and the body in which it is screwed when using connectors for the above mentioned types of tube is usually carried out through the insertion of teflon tape, teflon liquid or a weak adhesive between the connecting parts.

This though requires an extra operation by the user who carries out the assembly and does not exclude the danger that a part of the sealing material inserted enters and partially obstructs the pipe line designed for the flow of water to be canalized.

The object of the present invention is to eliminate the need of the insertion of usual sealing materials and to equally get round the consequent work and inconveniences.

In is in fact the object of the present invention to supply a connector already having a seal in correspondence to the threaded part and therefore ready for use.

Another object of the present invention is to propose a connector with a seal which has already been fitted in the middle of its threaded shank. Said seal being an integral part of the thread and designed to tap and to closely interact with the thread of the body to which the sank of the connector will be screwed.

In this way the connector can be stored, packaged and delivered already complete of seals and then immediately screwed into place without the need of any preliminary preparations. The seal which is attached to the thread to which the connector will be connected is therefore correspondingly threaded, included in the mounting and achieves a positive and secure sealing of the fluid in the final connection.

Said objects are achieved using a connector for tubes of any configuration and with at least one threaded shank, being either cylindrical or conic, which is substantially in accordance with claim 1 which will follow.

Further details of the present invention will however appear clearer from the following description with references being made to the attached drawings of the connector in which:

Fig. 1 is a connector having a separate throat and seal;

Fig. 2 is a connector complete of a seal;

Fig. 3 is a section view of a fitted connector in use.

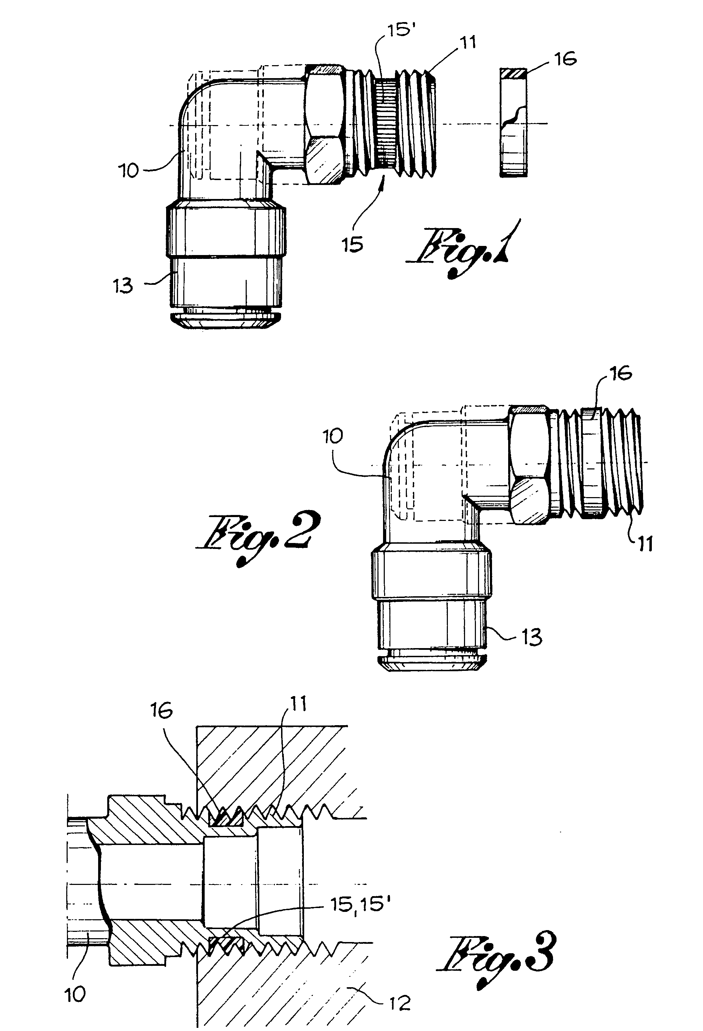

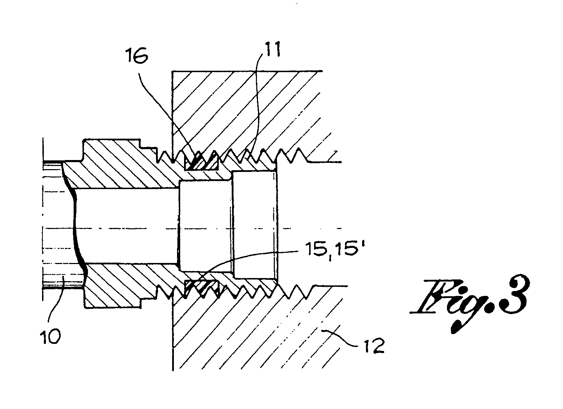

The present invention relates to a connector (10) which can either be straight, angular, T-shaped, cross-shaped, etc. and can have at least one threaded shank (11) which is screwed into a body with a correspondingly threaded hole (12), and at least one part (13) to which a tube or other element for the flow of a fluid such as air is connected.

An annular groove (15) having a grooved or knurled base (15') is formed in the middle of the threaded shank (11). An annular seal (16) generally of PTFE, a plastic material or of elastomer is closely set inside the throat. The seal (16) is blocked inside the groove (15) so as not to rotate due to the grooved or knurled base (15') and has an external diameter more or less the same as the one of the thread of the threaded shank (11).

Thus, the connector is already fitted with a seal on its threaded shank (11), and when it is screwed into place on the body the seal correspondingly threads itself, complying with the threads of the hole (12) into which the shank is screwed and closely interacts with the two parts connecting for their sealing.

## Claims

1) A straight, angular, T-shaped, cross-shaped, etc. connector having at least one cylindrical or conic threaded shank (11) which screws onto a body with a correspondingly threaded hole, and at least one part to which a tube or other element for the flow of fluid, such as air, connects, characterized in that an annular groove (15) is perifically formed on said threaded shank (11) and in that an annular seal designed to seal the screw connection between said threaded shank (11) and the body into which it is screwed is closely set in said groove.

2) A connector as claimed in claim 1, characterized in that said annular seal (16) is of PTFE, a plastic or of elastomer and is set inside said annular groove (15) and therefore cannot rotate.

3) A connector as claimed in claim 1, characterized in that the base of said groove (15) is grooved or knurled so as to be fixed to the annular seal (16) to impede its rotation.

4) A connector as claimed in the previous claims, characterized in that the annular seal (16) has an external diameter more or less the same as that of the threaded shank and correspondingly threads itself to comply with the thread of the hole of the body into which the threaded shank is screwed.

*Fig.1*

*Fig.2*

*Fig.3*

Fig.3

EP 0 459 957 A1

## European Patent Office
## EUROPEAN SEARCH REPORT

Application Number

EP 91 83 0227

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 123 580 (FERCH) <br> * claims; figure 1 * <br> --- | 1,2,4 | F16L15/04 <br> F16L 41/10 |
| X | DE-A-1 450 386 (PARKER-HANNIFIN CORP.) <br> * page 4, line 8 - line 13; figure 13 * <br> ----- | 1,2,4 | |
| | | | TECHNICAL FIELDS SEARCHED (Int. Cl.5) |
| | | | F16L |

The present search report has been drawn up for all claims

| Place of search | Date of completion of the search | Examiner |
|---|---|---|
| THE HAGUE | 02 SEPTEMBER 1991 | HUBEAU M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04011)

5